# EUROPÄISCHE PATENTANMELDUNG

(11) **EP 2 716 951 A1**
(43) Veröffentlichungstag der Anmeldung: **09.04.2014**
(21) Anmeldenummer: 12187253.5
(22) Anmeldetag: 04.10.2012
(51) Int. Cl.: F16L 5/04, F16L 5/14, H02G 3/22

(54) **Leitungsdurchführungssystem**

(71) Anmelder: Enn, Maria, 82223 Eichenau (DE)
(72) Erfinder: Enn, Maria, 82223 Eichenau (DE)
(74) Vertreter: KLIMENT & HENHAPEL

(57) **Zusammenfassung**

Leitungsdurchführungssystem umfassend eine Öffnung, vorzugsweise einen Durchbruch (5), mit einem Öffnungsquerschnitt, vorzugsweise Durchbruchsquerschnitt (6), in einer eine Dicke (4) aufweisenden Wand oder Decke (3). Um ein einfaches und exaktes Positionieren von Leitungen im Durchbruch und gleichzeitig ein Auffüllen des Durchbruchs ohne aufwendiges Abschalen zu ermöglichen, ist es erfindungsgemäß vorgesehen, dass das Leitungsdurchführungssystem eine Positioniervorrichtung für mindestens eine einen Leitungsquerschnitt (8) aufweisende Leitung, insbesondere Rohrleitung (7), aufweist, dass die Positioniervorrichtung mehrere Platten (1, 22) umfasst, die in der Öffnung (5) angeordnet sind und den Öffnungsquerschnitt (6) verschließen, dass die Platten (1, 22) eine Plattendicke (2) aufweisen, die geringer ist als die Dicke (4) der Wand oder Decke (3), und dass mindestens eine Durchführung (9) mit einem Durchführungsquerschnitt (10), der der die Aufnahme der mindestens einen Leitung (7) erlaubt, in mindestens einer Platte (1) vorgesehen ist.

## Beschreibung

### GEBIET DER ERFINDUNG

Die vorliegende Erfindung betrifft ein Leitungsdurchführungssystem umfassend eine Öffnung, vorzugsweise einen Durchbruch, mit einem Öffnungsquerschnitt, vorzugsweise Durchbruchsquerschnitt, in einer eine Dicke aufweisenden Wand oder Decke.

### STAND DER TECHNIK

Häufig müssen durch Wände oder Decken Leitungen aller Art, insbesondere Rohrleitungen geführt werden. Dabei sind die Leitungen z.B. Teil von Sanitär-, Heizungs- oder Elektroinstallationen.

Hierzu sind die Wände oder Decken mit Öffnungen, insbesondere Durchbrüchen versehen. Das anschließende Auffüllen eines Durchbruchs erfolgt in der Praxis üblicherweise so, dass der Durchbruch zunächst abgeschalt wird, indem Holz- oder Dämmplatten mit Bauschaum eingepasst werden. Anschließend wird der Durchbruch mit Füllmaterial, beispielsweise mit Beton oder Mörtel, aufgefüllt.

Nachteilig erweist sich hier das erschwerte Arbeiten aufgrund des zumeist begrenzten Platzes bzw. einer begrenzten Zugänglichkeit, woraus ein hoher Arbeitsaufwand und/oder eine schlechte Ausführungsqualität resultieren. Dies trifft insbesondere dann zu, wenn mehrere Leitungen durch den Durchbruch geführt und im Durchbruch exakt zueinander positioniert werden müssen.

Um den Aufwand zu reduzieren, wird der Einfachheit halber oft Bauschaum sehr großzügig beim Abschalen eingesetzt, was jedoch im Hinblick auf den Brandschutz und Schallschutz äußerst problematisch ist. So kommt es in der Praxis oft vor, dass Installationsleitungen direkt am Rand eines Durchbruchs liegen oder Leitungen direkt aneinander montiert werden, wodurch Teilbereiche des Durchbruchs nicht mit Füllmaterial ausgefüllt werden können und somit den gesetzlichen Vorschriften nicht entsprochen wird.

Der lagemäßig richtige Einbau von Brandschutzschellen, welche auf Leitungen montiert werden, ist bei herkömmlicher Arbeitsweise sehr schwierig auszuführen, da die Herstellung einer ebenen Abschalfläche fast nicht möglich ist und die Brandschutzschellen meist nicht vollständig in das Füllmaterial eingebettet werden können. Hierdurch bzw. durch unterschiedliche Überdeckungsstärken, die aus der nicht ebenen Abschalfläche resultieren, kommt es dazu, dass Wärme schlecht oder nicht gleichmäßig übertragen wird. Dies führt dazu, dass die Brandschutzschellen gar nicht oder nur stark verzögert auslösen und somit Brandübertragung über die Rohrleitungen erfolgen kann.

### AUFGABE DER ERFINDUNG

Aufgabe der vorliegenden Erfindung ist es, ein Leitungsdurchführungssystem für Leitungen zur Verfügung zu stellen, das die oben genannten Nachteile vermeidet. Insbesondere soll ein einfaches und exaktes Positionieren der Leitungen in einer Öffnung, vorzugsweise einem Durchbruch, ermöglicht werden. Zusätzlich soll ein flexibles System geschaffen werden, das an durch baustellenbedingte Gegebenheiten, die im Detail, z.B. aufgrund von zusätzlichen oder entfallenen Leitungen, und auch die genauen Abmessungen betreffend von einer Planung abweichen können, einfach angepasst werden kann. Gleichzeitig soll das Auffüllen des Durchbruchs ohne ein aufwendiges Abschalen erfolgen können. Weiters soll im Falle von mit Brandschutzschellen versehenen Leitungen ein lagerichtiger Einbau ermöglicht und eine gute Wärmeleitung zu den Brandschutzschellen garantiert werden, um einen optimalen Brandschutz zu gewährleisten. Schließlich soll eine gleichmäßige (Einbau-)Dicke des Füllmaterials und ein vollständiges Umhüllen der Leitungen garantiert werden, um den geforderten Schallschutz zu erreichen.

### DARSTELLUNG DER ERFINDUNG

Kern der Erfindung ist, dass ein Leitungsdurchführungssystem umfassend eine Öffnung, vorzugsweise einen Durchbruch, mit einem Öffnungsquerschnitt, vorzugsweise Durchbruchsquerschnitt, in einer eine Dicke aufweisenden Wand oder Decke, eine Positioniervorrichtung beinhaltet. Diese Positioniervorrichtung erlaubt einerseits die exakte Positionierung einer Leitung im Durchbruch oder mehrerer Leitungen im Durchbruch bzw. zueinander im Durchbruch. Andererseits verschließt die Positioniervorrichtung den Durchbruch von einer Seite der Wand oder Decke, sodass der Durchbruch von der anderen Seite der Wand oder Decke mit Füllmaterial, wie z.B. mit Beton oder Mörtel, aufgefüllt werden kann, ohne dass eine zusätzliche, aufwendige Abschalung des Durchbruchs erfolgen muss.

Die Positioniervorrichtung weist zu diesem Zweck mehrere Platten auf, die in der Öffnung angeordnet sind. Vorzugsweise sind die Platten in einem Endbereich der Öffnung angeordnet, wobei sich der Endbereich bis zu einer Seite der Wand oder Decke erstreckt. Die Platten weisen eine Plattendicke auf, die geringer ist als die Dicke der Wand oder Decke, sodass die Platten den Durchbruch (bezüglich der Wanddicke) jedenfalls nicht vollständig ausfüllen. Die Plattendicke wird dabei in derselben Richtung gemessen wie die Dicke der Wand oder Decke, d.h. normal zum Öffnungsquerschnitt bzw. Durchbruchsquerschnitt, und muss für alle Platten nicht exakt gleich sein. Die Anordnung der Platten im Durchbruch kann auch so erfolgen, dass jeweils jene Seite der Platten, die in den Durchbruch hinein weist, bündig mit der Wand oder Decke abschließt, sodass die Platten nicht in den Durchbruch hinein ragen und den Durchbruch überhaupt nicht (bezüglich der Wanddicke) ausfüllen.

Die Platten verschließen aber jedenfalls den Durchbruchsquerschnitt, vorzugsweise vollständig bis auf mindestens eine Durchführung für mindestens eine Leitung. Die mindestens eine Leitung weist einen Leitungsquerschnitt auf, der wiederum eine gewisse Form, beispielsweise eine Kreisform, eine elliptische Form oder eine rechteckige Form, und eine gewisse Größe aufweist. Der Leitungsquerschnitt ist hierbei klarerweise als Gesamtquerschnitt der betreffenden Leitung zu verstehen; z.B. ist bei einer Leitung, die aus einem Kanalrohr im Isolierschlauch besteht, der Leitungsquerschnitt der Querschnitt des Kanalrohrs mit Isolierschlauch, und nicht des Kanalrohrs alleine. Es sei außerdem bemerkt, dass es sich bei der mindestens einen Leitung nicht notwendigerweise um eine Rohrleitung handeln muss, d.h. es sind beispielsweise auch Schlauchleitungen möglich.

Zur exakten Positionierung der mindestens einen Leitung im Durchbruch weist mindestens eine Platte die mindestens eine Durchführung auf, die wiederum einen Durchführungsquerschnitt aufweist, der die Aufnahme der mindestens einen Leitung erlaubt. Vorzugsweise entspricht der Durchführungsquerschnitt der mindestens einen Durchführung in Form und Größe dem Leitungsquerschnitt der mindestens einen Leitung.

Die mindestens eine Platte kann dabei mit der mindestens einen Durchführung vorgefertigt sein, oder die mindestens eine Durchführung kann nachträglich in die mindestens eine Platte aus Vollmaterial eingebracht werden, z.B. durch Ausschneiden.

Größe und Form der Platten können grundsätzlich an Form und Größe des Öffnungsquerschnitts bzw. Durchbruchsquerschnitts angepasst werden. Die Verwendung von mehreren Platten erweist sich dabei als vorteilhaft. Durch die Verwendung mehrerer Platten können einerseits Durchbrüche in unterschiedlichsten Größen leichter abgedeckt werden. Andererseits können bei mehreren durch den Durchbruch zu führenden Leitungen mit unterschiedlichen Leitungsquerschnitten Platten mit vorgefertigten, unterschiedlich großen Durchführungen verwendet werden, wobei jede Platte beispielsweise eine oder mehrere Durchführungen mit einem bestimmten Durchführungsquerschnitt aufweist. Diese Platten können mit Blindplatten aus Vollmaterial, die keine Durchführung aufweisen, kombiniert werden, um den Durchbruchsquerschnitt vollständig zu verschließen.

Entsprechend ist es bei einem Leitungsdurchführungssystem umfassend eine Öffnung, vorzugsweise einen Durchbruch, mit einem Öffnungsquerschnitt, vorzugsweise Durchbruchsquerschnitt, in einer eine Dicke aufweisenden Wand oder Decke erfindungsgemäß vorgesehen, dass das Leitungsdurchführungssystem eine Positioniervorrichtung für mindestens eine einen Leitungsquerschnitt aufweisende Leitung, insbesondere Rohrleitung, aufweist, dass die Positioniervorrichtung mehrere Platten umfasst, die in der Öffnung angeordnet sind und den Öffnungsquerschnitt verschließen, dass die Platten eine Plattendicke aufweisen, die geringer ist als die Dicke der Wand oder Decke, und dass mindestens eine Durchführung mit einem Durchführungsquerschnitt, der die Aufnahme der mindestens einen Leitung erlaubt, in mindestens einer Platte vorgesehen ist.

Um die Montage zu erleichtern sind die Platten bis zu einem gewissen Grad gegeneinander verschiebbar. Hierbei werden im Zuge der Verlegung der Rohrleitungen die einzelnen Platten mit den entsprechenden Durchführungen über die Rohrleitungen geschoben. Um den Durchbruchsquerschnitt vollständig zu verschließen, können weitere Blindplatten, d.h. Platten ohne Durchführungen, vorgesehen werden. Durch das Verschieben der Platten bzw. Blindplatten relativ zueinander, d.h. zueinander und gegeneinander, in der Ebene parallel zum Durchbruchsquerschnitt können in der Praxis vorkommende Bautoleranzen oder Maßungenauigkeiten einfach ausgeglichen werden. D.h. es kann eine problemlose Anpassung an die bauliche Situation erfolgen. Entsprechend ist es bei einer bevorzugten Ausführungsform des erfindungsgemäßen Leitungsdurchführungssystems vorgesehen, dass die Platten in einer Ebene parallel zum Öffnungsquerschnitt relativ zueinander verschiebbar sind.

Um beim Verschieben der Platten zu verhindern, dass Spalten entstehen, durch die beim Auffüllen des Durchbruchs Füllmaterial treten könnte, weist jede Platte an ihrem Rand mindestens einen Vorsprung auf, der aus der Plattenebene herausragt. Vorzugsweise steht der Vorsprung normal auf die Plattenebene, sodass sich am Rand der Platte ein L-förmiger Querschnitt ergibt. Entsprechend ist es bei einer bevorzugten Ausführungsform des erfindungsgemäßen Leitungsdurchführungssystems vorgesehen, dass die Platten jeweils an ihrem Rand zumindest abschnittsweise mit einem aus der Plattenebene herausragenden Vorsprung ausgeführt sind, wobei der Querschnitt des jeweiligen Vorsprungs samt Platte vorzugsweise L-förmig ist.

Der Vorsprung muss nicht entlang des gesamten Randes jeder Platte angeordnet sein. Entsprechend ist es bei einer bevorzugten Ausführungsform des erfindungsgemäßen Leitungsdurchführungssystems vorgesehen, dass die Vorsprünge an jenen Abschnitten des Rands der Platten angeordnet sind, die an benachbarte Platten angrenzen.

Die Platten sind nun so gegeneinander gedreht, dass deren Vorsprünge jeweils auf die andere Platte weisen. D.h. der mindestens eine Vorsprung der einen Platte weist in den Durchbruch hinein, wohingegen der mindestens eine Vorsprung der anderen Platte aus dem Durchbruch heraus bzw. von diesem weg weist. Idealerweise kontaktieren die Vorsprünge dabei die jeweils andere Platte, sodass beim Verschieben der Platten die Vorsprünge auf der jeweils anderen Platte gleiten. Entsprechend ist es bei einer bevorzugten Ausführungsform des erfindungsgemäßen Leitungsdurchführungssystems vorgesehen, dass die Vorsprünge von zwei aneinander grenzenden Platten jeweils zur anderen Platte weisen und diese vorzugsweise kontaktieren.

Im Falle eines L-förmigen Querschnitts sind die Vorsprünge dabei vorzugsweise parallel orientiert. Entsprechend ist es bei einer bevorzugten Ausführungsform des erfindungsgemäßen Leitungsdurchführungssystems vorgesehen, dass die Vorsprünge parallel zueinander orientiert sind.

Aufgrund der Vorsprünge und deren Anordnung können die Platten in einer Ebene parallel zum Durchbruchsquerschnitt nur soweit zueinander bzw. auseinander verschoben werden, bis die Vorsprünge der benachbarten Platten aneinander stoßen. Beim Auseinanderschieben von benachbarten Platten kommt es somit zu einem Punkt, bei dem die Vorsprünge der benachbarten Platten wie Haken aneinander stoßen und ein weiteres Auseinanderschieben unmöglich machen. Ein Spalt zwischen diesen beiden Platten kann sich somit nicht ausbilden. Auf diese Weise kann ein vollständiges Verschließen des Öffnungsquerschnitts garantiert werden.

Die Anordnung der Platten im Durchbruch kann auf unterschiedliche Art und Weise erfolgen. Beispielsweise kann der Durchbruch eine bauseits hergestellte Aussparung oder ein bauseits hergestelltes Auflager aufweisen, in welche oder auf welches die Platten platziert werden.

Entsprechend ist es bei einer bevorzugten Ausführungsform des erfindungsgemäßen Leitungsdurchführungssystems vorgesehen, dass die Öffnung ein bauseits hergestelltes Auflager aufweist, auf dem die Platten angeordnet sind. Ein solches bauseits hergestelltes Auflager kann beispielsweise Teil einer Stahlbetondecke, Teil einer Elementdecke umfassend eine (Stahlbeton-)Fertigteildecke mit einer Auf- bzw. Ortbetonergänzung oder Teil einer Fertigteildecke sein und ist vorzugsweise im Endbereich der Öffnung bzw. des Durchbruchs angeordnet. Die Platten liegen auf diesem Auflager auf.

Alternativ ist erfindungsgemäß ein Winkelrahmen vorgesehen, auf dem die Platten platziert werden. Der Winkelrahmen wiederum ist im Durchbruch, vorzugsweise in dessen Endbereich fixiert. Die Fixierung kann beispielsweise durch Verschraubung erfolgen, oder indem der Winkelrahmen in die Wand oder Decke einbetoniert ist. In letzterem Fall wird der Durchbruch bzw. die Öffnung beim Betonieren der Wand oder Decke erzeugt, indem ein dem Durchbruchs- bzw. Öffnungsquerschnitt entsprechender Bereich ausgespart wird. Im Falle des Einbetonierens weist der Winkelrahmen zu dessen Fixierung idealerweise mindestens eine Pratze auf, die im Beton aufgenommen ist.

Der Winkelrahmen kann dabei entlang eines Teils des Umfangs des Öffnungs- bzw. Durchbruchsquerschnitts angeordnet sein oder entlang des gesamten Umfangs des Öffnungs- bzw. Durchbruchsquerschnitts. Daher ist es bei einer bevorzugten Ausführungsform des erfindungsgemäßen Leitungsdurchführungssystems vorgesehen, dass die Positioniervorrichtung weiters einen Winkelrahmen umfasst, der in der Öffnung fixiert ist, und dass die Platten auf dem Winkelrahmen angeordnet sind.

Um ein Verrutschen der Platten am Winkelrahmen zu vermeiden, ist es bei einer bevorzugten Ausführungsform des erfindungsgemäßen Leitungsdurchführungssystems vorgesehen, dass die Platten mit dem Winkelrahmen, vorzugsweise durch Verschraubung, verbunden sind. Im Falle einer Verschraubung sind wahlweise sowohl am Winkelrahmen als auch an den Platten entsprechende Bohrungen bzw. Gewinde zur Durchführung bzw. Aufnahme von Schrauben vorgesehen, oder die Verschraubung wird mit selbstscheidenden Schrauben hergestellt.

Wird der Winkelrahmen einbetoniert, erweisen sich Justierhilfen als praktisch, um den Winkel beim Betonieren exakt positionieren zu können. Bei den Justierhilfen kann es sich beispielsweise um Löcher im Winkelrahmen handeln, welche das Annageln oder Verschrauben des Winkelrahmens ermöglichen, um diesen für das Einbetonieren exakt zu fixieren. Ebenso kann ein laschenförmiger Teil, der Teil des Winkelrahmens ist oder an diesem, beispielsweise durch Verschweißung oder Verschraubung, befestigt ist, als Justierhilfe vorgesehen sein. Insbesondere kann dieser laschenförmige Teil mit einem Loch versehen sein, um eine Fixierung des Winkelrahmens beim Betonieren der Wand oder Decke, z.B. mittels Verschraubung, zu ermöglichen. Darüberhinaus kann der laschenförmige Teil auch so umgebogen bzw. angeordnet werden, dass die Justierhilfe vom Winkelrahmen absteht und beim Einbetonieren als Pratze fungieren kann. Daher ist es bei einer bevorzugten Ausführungsform des erfindungsgemäßen Leitungsdurchführungssystems vorgesehen, dass am Winkelrahmen mindestens eine lochförmige oder laschenförmige Justierhilfe angeordnet ist.

Wie aus obigem hervorgeht, kann die Positioniervorrichtung, insbesondere der Winkelrahmen, bereits beim Betonieren der Wand oder Decke eingesetzt werden. Um beim Betonieren den Durchbruch mit dem Durchbruchsquerschnitt erzeugen zu können, werden außerdem Schalungskörper benötigt, die verhindern, dass der Beton in den Bereich des Durchbruchs bzw. der Öffnung rinnt. Hierbei ist zu beachten, dass die Schalungskörper so angeordnet werden, dass der Winkelrahmen wie gewünscht zum Durchbruch angeordnet ist. Zur Realisierung einer besonders einfach handhabbaren Lösung, die dies leistet, ist es bei einer bevorzugten Ausführungsform des erfindungsgemäßen Leitungsdurchführungssystems vorgesehen, dass am Winkelrahmen mindestens ein Schalungskörper angeordnet ist.

Falls der mindestens eine Schalungskörper als verlorene Schalung im Durchbruch verbleiben soll, ist der mindestens eine Schalungskörper vorzugsweise untrennbar mit dem Winkelrahmen verbunden. Vorzugsweise ist der mindestens eine Schalungskörper in diesem Fall aus Blech, Faserbeton oder Faserzementplatten gefertigt.

Falls der mindestens eine Schalungskörper nachträglich demontierbar sein soll, ist der mindestens eine Schalungskörper lösbar mit dem Winkelrahmen verbunden. Vorzugsweise ist der mindestens eine Schalungskörper in diesem Fall aus Styropor oder Holz gefertigt. Daher ist es bei einer bevorzugten Ausführungsform des erfindungsgemäßen Leitungsdurchführungssystems vorgesehen, dass der mindestens eine Schalungskörper mit dem Winkelrahmen lösbar verbunden ist. Weiters ist es bei einer bevorzugten Ausführungsform des erfindungsgemäßen Leitungsdurchführungssystems vorgesehen, dass der mindestens eine Schalungskörper aus Blech, Faserbeton, Faserzementplatten, Styropor oder Holz gefertigt ist.

Weisen die Leitungen Brandschutzschellen auf, so ist es für das rasche Auslösen jeder Brandschutzschelle im Brandfall wichtig, dass die durch den Brand erzeugte Wärme gut bzw. rasch zur jeweiligen Brandschutzschelle geleitet wird. Dabei kontaktiert die jeweilige Brandschutzschelle die jeweilige Platte am Rand der mindestens einen Durchführung. Entsprechend ist die Wärmeleitung dieser Platte entscheidend. Um eine gute Wärmeleitung der Platten zu garantieren, ist es daher bei einer besonders bevorzugten Ausführungsform des erfindungsgemäßen Leitungsdurchführungssystems vorgesehen, dass die Platten aus Metall gefertigt sind.

Wie bereits festgehalten, können die Platten grundsätzlich in beliebiger Form und Größe - entsprechend der Form und Größe des Durchbruchsquerschnitts - hergestellt werden. In der Praxis sind Durchbruchsquerschnitte zumeist rechteckig ausgeführt. Um modular beliebige Größen solcher Durchbrüche abdecken zu können, ist bei einer besonders bevorzugten Ausführungsform des erfindungsgemäßen Leitungsdurchführungssystems vorgesehen, dass die Platten rechteckförmig sind. Durch Aneinanderreihung mehrerer solcher Platten lässt sich die Positioniervorrichtung für nahezu beliebig große rechteckige Durchbrüche bzw.

Durchbruchsquerschnitte einsetzen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Aufsicht auf ein erfindungsgemäßes Leitungsdurchführungssystem mit mehreren Platten, inklusive Blindplatten, mit Blick auf einen Durchbruchsquerschnitt
- Fig. 2: eine Schnittansicht gemäß der Schnittlinie I-I in Fig. 1
- Fig. 3: eine vergrößerte Ansicht des Details A in Fig. 2
- Fig. 4: eine Aufsicht auf ein erfindungsgemäßes Leitungsdurchführungssystem mit mehreren Platten und mehreren Schalungskörpern, mit Blick auf einen Durchbruchsquerschnitt
- Fig. 5: eine Schnittansicht gemäß der Schnittlinie III-III in Fig. 4
- Fig. 6: eine vergrößerte Ansicht des Details B in Fig. 5
- Fig. 7: ein Detail einer Schnittansicht gemäß der Schnittlinie V-V in Fig. 1
- Fig. 8: eine Ansicht analog zu Fig. 6, jedoch mit einem Winkelrahmen mit L-förmigem Querschnitt
- Fig. 9: eine Ansicht analog zu Fig. 6, jedoch mit einem bauseits hergestellten Auflager

### WEGE ZUR AUSFÜHRUNG DER ERFINDUNG

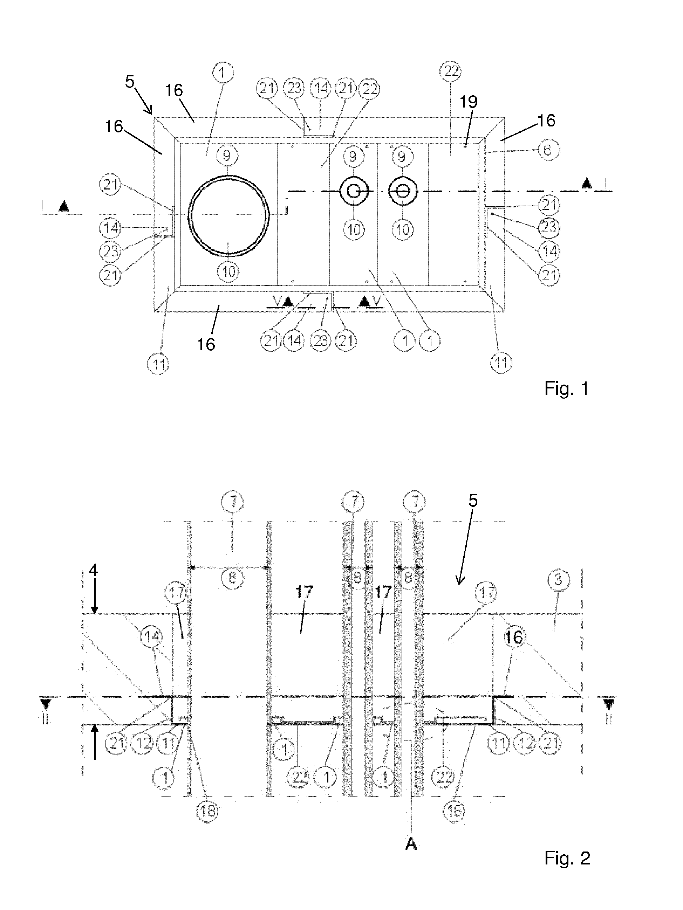

Fig. 1 zeigt in Aufsicht ein erfindungsgemäßes Leitungsdurchführungssystem mit einer als Durchbruch 5 ausgeführten Öffnung. Der Durchbruch 5 weist einen Durchbruchsquerschnitt 6 auf und ist in einer Decke 3 (vgl. Fig. 2) angeordnet. Die Aufsicht der Fig. 1 mit Blick auf den Durchbruchsquerschnitt 6 entspricht dabei einer Schnittansicht gemäß der Schnittlinie II-II in Fig. 2, wobei die ausgefüllten Dreiecke die Blickrichtung andeuten.

Der Durchbruchsquerschnitt 6 wird im Ausführungsbeispiel der Fig. 1 von insgesamt fünf Platten 1 bzw. Blindplatten 22 verschlossen. Dabei weisen drei Platten 1 jeweils eine Durchführung 9 mit jeweils einem Durchführungsquerschnitt 10 auf. Die zwei Blindplatten 22 weisen keinerlei Durchführung 9 auf und sind aus Vollmaterial gefertigt. Sie dienen vor allem zum vollständigen Verschließen des Durchbruchsquerschnitts 6 bei gleichzeitiger, exakter Positionierung der Rohrleitungen 7 im Durchführungsquerschnitt 6.

Durch die Durchführungen 9 sind Rohrleitungen 7 (vgl. Fig. 2) durchgeführt, wobei jede Rohrleitung 7 einen Leitungsquerschnitt 8 aufweist. Die Durchführungsquerschnitte 10 sind so dimensioniert, dass eine problemlose Aufnahme der Rohrleitungen 7 möglich ist. Vorzugsweise entsprechen die Durchführungsquerschnitte 10 den Leitungsquerschnitten 8 in Form und Größe, wodurch ein vernachlässigbares Spiel der Rohrleitungen 7 in den Durchführungen 9 gegeben ist.

Die Aufnahme der Rohrleitungen 7 in den Durchführungen 9 gewährleistet eine exakte Positionierung der Rohrleitungen 7 im Durchbruch 5 bzw. Durchbruchsquerschnitt 6 und zueinander. Ein Anliegen der Rohrleitungen 7 aneinander oder am Durchbruch 5 wird somit ausgeschlossen. Dies garantiert wiederum, dass alle Zwischenräume zwischen den Rohrleitungen 7 untereinander sowie zwischen den Rohrleitungen 7 und dem Durchbruch 5 tatsächlich mit Füllmaterial 17 gefüllt werden können. Diese vollständige Füllung mit Füllmaterial 17 ist unabdingbar für die zuverlässige Gewährleistung von Schallschutz und Brandschutz.

Im Ausführungsbeispiel der Fig. 1 sind zwei der Platten 1 mit jeweils einer Durchführung 9 versehen, die beispielsweise für Heizungs- und/oder Wasserleitungen im Isolierschlauch geeignet ist. Weiters ist eine Platte 1 mit einer Durchführung 9 versehen, die einen deutlich größeren Durchführungsquerschnitt 10 aufweist. Eine solche Durchführung 9 ist beispielsweise für ein Kanalrohr im Isolierschlauch geeignet.

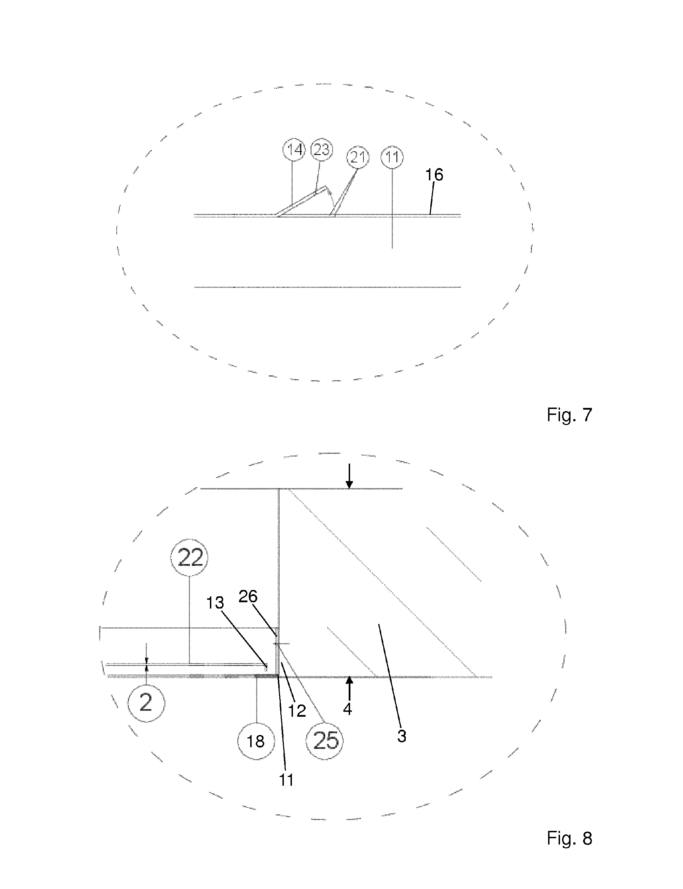

Die Platten 1 bzw. Blindplatten 22 sind auf einem Winkelrahmen 11 angeordnet, der einen Z-förmigen Querschnitt aufweist und in einem Endbereich 12 des Durchbruchs 5 fixiert ist. In Fig. 2, die eine Schnittansicht gemäß der Schnittlinie I-I in Fig. 1 zeigt, ist erkennbar, dass der Winkelrahmen 11 in die Decke 3 mit einem ersten Schenkel 16, der im gezeigten Ausführungsbeispiel waagrecht orientiert ist, einbetoniert ist. D.h. im vorliegenden Fall wurde der Winkelrahmen 11 schon beim Betonieren der Decke 3 mit einbetoniert. Um das Einbetonieren des Winkelrahmens 11 zu erleichtern, sind laschenförmige oder pratzenförmige Justierhilfen 14 vorgesehen, die eine einfache Handhabung des Winkelrahmens 11 gestatten. Diese Justierhilfen 14 werden durch einen L-förmigen Einschnitt 21 im ersten Schenkel 16 erzeugt, der in der Aufsicht der Fig. 1 erkennbar ist. Durch diesen Einschnitt 21 kann jede Justierhilfe 14, beispielsweise mit Hilfe einer Zange, vom ersten Schenkel 16 weg aufgebogen werden, vgl. Fig. 7, die eine Schnittansicht gemäß der Schnittlinie V-V in Fig. 1 zeigt.

Die Justierhilfen 14 können weiters mit Bohrungen 23 versehen sein, um den Winkelrahmen 11 zusätzlich, beispielsweise mit Schrauben, beim Einbetonieren fixieren zu können.

Im Ausführungsbeispiel der Fig. 1 verläuft der Winkelrahmen 11 entlang des gesamten Umfangs des Durchbruchsquerschnitts 6 und bildet mit einem zweiten Schenkel, der im gezeigten Ausführungsbeispiel parallel zum ersten Schenkel 16 verläuft und ebenfalls waagrecht orientiert ist, eine Auflagefläche 18 aus. Wie in der Schnittansicht der Fig. 2 gut erkennbar ist, liegen auf dieser Auflagefläche 18 die Platten 1 bzw. Blindplatten 22 auf. Um die Platten 1 bzw. Blindplatten 22 auf dem Winkelrahmen 11 zu fixieren, sind Bohrungen 19 in den Platten 1 bzw. Blindplatten 22 und dem Winkelrahmen 11 vorgesehen (vgl. Fig. 1), durch die eine Verschraubung der Platten 1 bzw. Blindplatten 22 am Winkelrahmen 11 möglich ist. Alternativ kann auf die Bohrungen 19 verzichtet werden und kann eine Verschraubung mit selbstschneidenden Schrauben (nicht dargestellt) erfolgen.

In Fig. 2 ist gut zu erkennen, wie die Rohrleitungen 7 durch die Durchführungen 9 der Platten 1 hindurchgeführt und positioniert sind. Im Endbereich 12, in welchem der Winkelrahmen 11 und die Platten 1 bzw. Blindplatten 22 im gezeigten Ausführungsbeispiel angeordnet sind, wird der Durchbruchsquerschnitt 6 durch die Platten 1 bzw. Blindplatten 22 - und durch die durch die Durchführungen 9 hindurchgeführten Rohrleitungen 7 - vollständig verschlossen. Somit kann der Durchbruch 5 aufgefüllt werden, indem Füllmaterial 17, z.B. Beton oder Mörtel, in die verbleibenden Zwischenräume gefüllt wird.

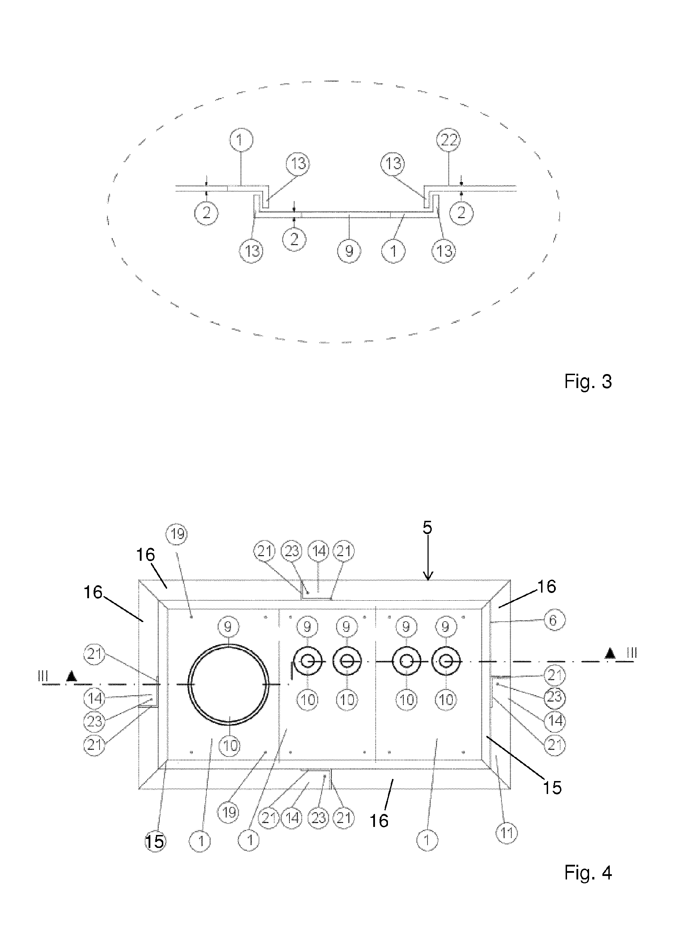

Es ist wichtig auszuschließen, dass die Platten 1 bzw. Blindplatten 22 gegeneinander soweit verrutschen können, dass Spalten entstehen, durch welche Füllmaterial 17 austreten könnte. Daher sind die Platten 1 bzw. Blindplatten 22 an deren Rändern mit Vorsprüngen 13 versehen, die von der Ebene der jeweiligen Platte 1 bzw. Blindplatte 2 abstehen. Im gezeigten Beispiel stehen die Vorsprünge 13 normal auf die jeweilige Platte 1 bzw. Blindplatte 22, sodass deren Ränder einen L-förmigen Querschnitt aufweisen. Dies ist besonders gut in Fig. 3 ersichtlich, die eine Vergrößerung des Details A aus Fig. 2 zeigt.

Jeweils zwei aneinander grenzende Platten 1 bzw. Blindplatten 22 sind dabei gegeneinander so verdreht, dass der Vorsprung 13 der einen Platte 1 bzw. Blindplatte 22 zur anderen Platte 1 bzw. Blindplatte 22 weist. Die Platten 1 bzw. Blindplatten 22 sind in einer Ebene parallel zur Ebene der Platten 1 bzw. Blindplatten 22 bzw. in einer Ebene parallel zum Durchbruchsquerschnitt 6 relativ zueinander verschiebbar. Dabei sind benachbarte Platten 1 bzw. Blindplatten 22 parallel zueinander so positioniert, dass jeweils der Vorsprung 13 einer Platte 1 bzw. Blindplatte 22 auf der anderen Platte 1 bzw. Blindplatte 22 gleitet. Somit können die Platten 1 bzw. Blindplatten 22 in einer Richtung, die in einer Ebene parallel zu den Platten 1 bzw. Blindplatten 22 bzw. zum Durchbruchsquerschnitt 6 liegt, nur soweit auseinander verschoben werden, bis ihre Vorsprünge 13 sich ineinander verhaken, wie in Fig. 3 gezeigt. Die Ausbildung von Spalten zwischen den Platten 1 bzw. Blindplatten 22 wird somit unterbunden.

Die Möglichkeit, die Platten 1 bzw. Blindplatten 22 bis zu einem gewissen Grad gegeneinander zu verschieben, ist bei der Montage extrem hilfreich. Hierbei werden im Zuge der Verlegung der Rohrleitungen 7 die einzelnen Platten 1 über die Rohrleitungen 7 geschoben. Um den Durchbruchsquerschnitt 6 vollständig zu verschließen, können weitere Blindplatten 22 vorgesehen werden. Durch das Verschieben der Platten 1 bzw. Blindplatten 22 zueinander in der Ebene parallel zum Durchbruchsquerschnitt 6 können in der Praxis vorkommende Bautoleranzen oder Maßungenauigkeiten einfach ausgeglichen werden. D.h. es kann eine problemlose Anpassung an die bauliche Situation erfolgen.

In Fig. 3 ist außerdem ersichtlich, dass die Platten 1 bzw. Blindplatten 22 jeweils eine Plattendicke 2 aufweisen, die deutlich geringer ausfällt als die Dicke 4 der Decke 3 (vgl. Fig. 2). Entsprechend wird durch die Platten 1 zwar der Durchbruchsquerschnitt 6 verschlossen, der Durchbruch 5 wird jedoch durch die Platten 1 nicht ausgefüllt, wie in Fig. 2 zu sehen ist.

Die Verwendung mehrerer rechteckförmiger Platten 1 bzw. Blindplatten 22 gestattet es, annähernd beliebig große rechteckförmige Durchbruchsquerschnitte 6 zu verschließen. Fig. 4 zeigt ein Beispiel mit drei Platten 1, wobei analog zur Fig. 1 eine Aufsicht auf den Durchbruchsquerschnitt 6 dargestellt ist. Von den drei Platten 1 weisen zwei jeweils zwei Durchführungen 9 mit Durchführungsquerschnitten 10 auf, die in Form und Größe gleich sind. Diese Durchführungen 9 können beispielsweise für Heizungs- und/oder Wasserleitungen im Isolierschlauch verwendet werden. Die dritte Platte 1 weist eine einzelne Durchführung 9 mit einem größeren Durchführungsquerschnitt 10 auf, die beispielsweise für ein Kanalrohr im Isolierschlauch verwendet werden kann.

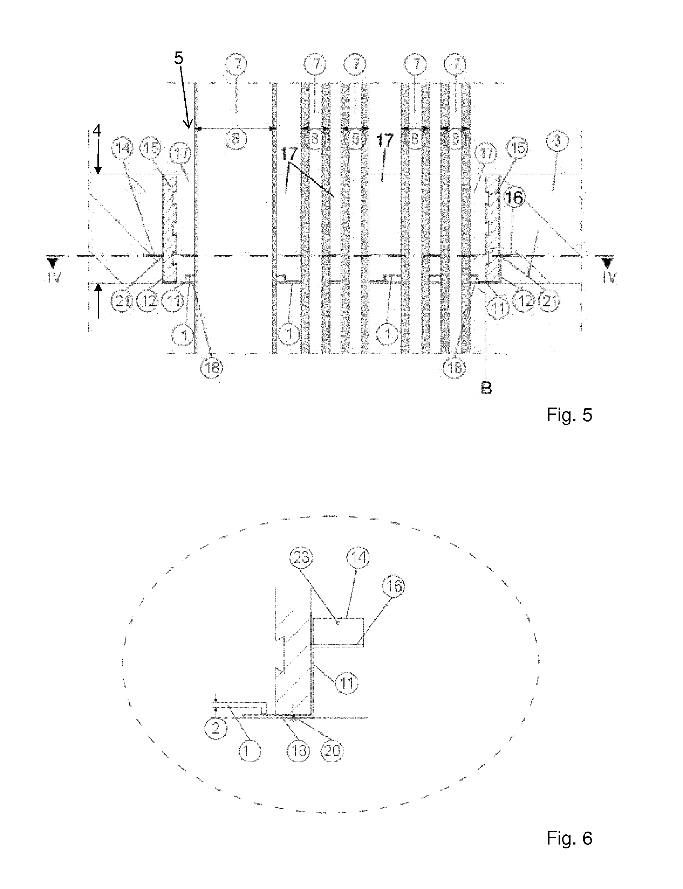

Fig. 5 zeigt eine Schnittansicht gemäß der Schnittlinie III-III in Fig. 4, wobei durch die Durchführungen 9 hindurchgeführte Rohrleitungen 7 erkennbar sind. Umgekehrt entspricht die Aufsicht der Fig. 4 einer Schnittansicht gemäß der Schnittlinie IV-IV in Fig. 5, wobei die ausgefüllten Dreiecke die Blickrichtung andeuten.

Auch in diesem Ausführungsbeispiel liegen die Platten 1 auf der Auflagefläche 18 des Winkelrahmens 11 auf. Zusätzlich sind am Winkelrahmen 11 bzw. auf dessen Auflagefläche 18 Schalungskörper 15 angeordnet, vgl. Fig. 6, die eine Vergrößerung des Details B in Fig. 5 zeigt.

Diese Schalungskörper 15 dienen zur Abschalung der Öffnung bzw. des Durchbruchs 5 beim Betonieren der Decke 3 und verhindern, dass beim Betonieren Beton in den Durchbruch 5 rinnt. Im gezeigten Ausführungsbeispiel sind die Schalungskörper 15 aus unbrennbaren Faserzementplatten gefertigt und mit dem Winkelrahmen 11 verbunden, wobei die Schalungskörper 15 beim Auffüllen des Durchbruchs 5 mit Füllmaterial 17 als verlorene Schalung im Durchbruch 5 verbleiben. Zur Fixierung der Schalungskörper 15 am Winkelrahmen 11 können Bohrungen 20 im Winkelrahmen 11 - z.B. für eine Verschraubung - verwendet werden.

Die Schnittansicht der Fig. 8 ist analog zu Fig. 6, jedoch ist in diesem Fall ein Winkelrahmen 11 vorhanden, der einen L-förmigen Querschnitt aufweist und nicht in die Decke 3 einbetoniert ist. Stattdessen ist ein erster Schenkel 26 des Winkelrahmens 11 im Endbereich 12 des Durchbruchs 5 verschraubt. Hierfür sind Bohrungen 25 im ersten Schenkel 26 vorgesehen. D.h. in diesem Fall wird der Winkelrahmen 11 erst nach dem Betonieren der Decke 3 bzw. nach Herstellung des Durchbruchs 5 im Durchbruch 5 angeordnet und fixiert.

Der Winkelrahmen 11 mit L-förmigem Querschnitt weist einen zweiten Schenkel auf, der im gezeigten Ausführungsbeispiel waagrecht orientiert ist und die Auflagefläche 18 ausbildet. Auf dieser liegen die Platten 1 bzw. Blindplatten 22 bzw. deren Vorsprünge 13 auf

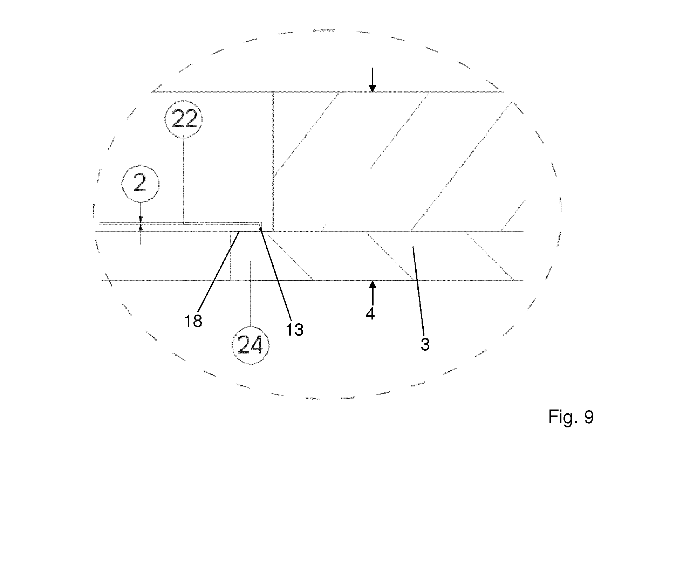

Fig. 9 zeigt ebenfalls eine zur Fig. 6 analoge Schnittansicht, jedoch für ein Ausführungsbeispiel ohne Winkelrahmen 11. Stattdessen ist ein bauseits hergestelltes Auflager 24 vorhanden, das Teil der Decke 3 ist und die Auflagefläche 18 ausbildet. Diese ist im gezeigten Ausführungsbeispiel waagrecht orientiert, sodass die Platten 1 bzw. Blindplatten 22 bzw. deren Vorsprünge 13 auf der Auflagefläche 18 aufliegen können. Es versteht sich, dass die Platten 1 bzw. Blindplatten 22 zu deren Lagefixierung auch mit dem bauseits hergestellten Auflager 24 verschraubt werden können (nicht dargestellt).

In den gezeigten Ausführungsbeispielen sind die Platten 1 bzw. Blindplatten 22 aus Metall gefertigt. Dies gewährleistet eine gute Wärmeleitung. Sind die Rohrleitungen 7 mit Brandschutzschellen (nicht dargestellt) versehen, kontaktieren die Brandschutzschellen die Platten 1 üblicherweise am Rand der Durchführungen 9. Im Brandfall wird die durch den Brand erzeugte Wärme über die Platten 1 bzw. Blindplatten 22 somit optimal zu den Brandschutzschellen geleitet, sodass die Brandschutzschellen auslösen und ihre Brandschutzfunktion einwandfrei erfüllen können.

### BEZUGSZEICHENLISTE

- 1: Platte
- 2: Plattendicke
- 3: Decke
- 4: Dicke der Decke
- 5: Durchbruch
- 6: Durchbruchsquerschnitt
- 7: Rohrleitung
- 8: Leitungsquerschnitt
- 9: Durchführung
- 10: Durchführungsquerschnitt
- 11: Winkelrahmen
- 12: Endbereich des Durchbruchs
- 13: Vorsprung
- 14: Justierhilfe
- 15: Schalungskörper
- 16: Erster Schenkel eines Winkelrahmens mit z-förmigem Querschnitt
- 17: Füllmaterial
- 18: Auflagefläche
- 19: Bohrung zur Fixierung von Platten am Winkelrahmen
- 20: Bohrung zur Fixierung von Schalungskörpern am Winkelrahmen
- 21: Einschnitt
- 22: Blindplatte
- 23: Bohrung in der Justierhilfe
- 24: Bauseits hergestelltes Auflager
- 25: Bohrung in erstem Schenkel eines Winkelrahmens mit L-förmigem Querschnitt
- 26: Erster Schenkel eines Winkelrahmens mit L-förmigem Querschnitt

## Patentansprüche

1. Leitungsdurchführungssystem umfassend eine Öffnung, vorzugsweise einen Durchbruch (5), mit einem Öffnungsquerschnitt, vorzugsweise Durchbruchsquerschnitt (6), in einer eine Dicke (4) aufweisenden Wand oder Decke (3), **dadurch gekennzeichnet, dass** das Leitungsdurchführungssystem eine Positioniervorrichtung für mindestens eine einen Leitungsquerschnitt (8) aufweisende Leitung, insbesondere Rohrleitung (7), aufweist, dass die Positioniervorrichtung mehrere Platten (1, 22) umfasst, die in der Öffnung (5) angeordnet sind und den Öffnungsquerschnitt (6) verschließen, dass die Platten (1, 22) eine Plattendicke (2) aufweisen, die geringer ist als die Dicke (4) der Wand oder Decke (3), und dass mindestens eine Durchführung (9) mit einem Durchführungsquerschnitt (10), der die Aufnahme der mindestens einen Leitung (7) erlaubt, in mindestens einer Platte (1) vorgesehen ist.

2. Leitungsdurchführungssystem nach Anspruch 1, **dadurch gekennzeichnet, dass** die Platten (1, 22) in einer Ebene parallel zum Öffnungsquerschnitt (6) relativ zueinander verschiebbar sind.

3. Leitungsdurchführungssystem nach einem der Ansprüche 1 bis 2, **dadurch gekennzeichnet, dass** die Platten (1, 22) jeweils an ihrem Rand zumindest abschnittsweise mit einem aus der Plattenebene herausragenden Vorsprung (13) ausgeführt sind, wobei der Querschnitt des jeweiligen Vorsprungs (13) samt Platte (1, 22) vorzugsweise L-förmig ist.

4. Leitungsdurchführungssystem nach Anspruch 3, **dadurch gekennzeichnet, dass** die Vorsprünge (13) an jenen Abschnitten des Rands der Platten (1, 22) angeordnet sind, die an benachbarte Platten (1, 22) angrenzen.

5. Leitungsdurchführungssystem nach Anspruch 4, **dadurch gekennzeichnet, dass** die Vorsprünge (13) von zwei aneinander grenzenden Platten (1, 22) jeweils zur anderen Platte (1, 22) weisen und diese vorzugsweise kontaktieren.

6. Leitungsdurchführungssystem nach einem der Ansprüche 4 bis 5, **dadurch gekennzeichnet, dass** die Vorsprünge (13) parallel zueinander orientiert sind.

7. Leitungsdurchführungssystem nach einem der Ansprüche 1 bis 6, **dadurch gekennzeichnet, dass** die Öffnung (5) ein bauseits hergestelltes Auflager (24) aufweist, auf dem die Platten (1, 22) angeordnet sind.

8. Leitungsdurchführungssystem nach einem der Ansprüche 1 bis 6, **dadurch gekennzeichnet, dass** die Positioniervorrichtung weiters einen Winkelrahmen (11) umfasst, der in der Öffnung (5) fixiert ist, und dass die Platten (1, 22) auf dem Winkelrahmen (11) angeordnet sind.

9. Leitungsdurchführungssystem nach Anspruch 8, **dadurch gekennzeichnet, dass** die Platten (1, 22) mit dem Winkelrahmen (11), vorzugsweise durch Verschraubung, verbunden sind.

10. Leitungsdurchführungssystem nach einem der Ansprüche 8 bis 9, **dadurch gekennzeichnet, dass** am Winkelrahmen (11) mindestens eine lochförmige oder laschenförmige Justierhilfe (14) angeordnet ist.

11. Leitungsdurchführungssystem nach einem der Ansprüche 8 bis 10, **dadurch gekennzeichnet, dass** am Winkelrahmen (11) mindestens ein Schalungskörper (15) angeordnet ist.

12. Leitungsdurchführungssystem nach Anspruch 11, **dadurch gekennzeichnet, dass** der mindestens eine Schalungskörper (15) mit dem Winkelrahmen (11) lösbar verbunden ist.

13. Leitungsdurchführungssystem nach einem der Ansprüche 11 bis 12, **dadurch gekennzeichnet, dass** der mindestens eine Schalungskörper (15) aus Blech, Faserbeton, Faserzementplatten, Styropor oder Holz gefertigt ist.

14. Leitungsdurchführungssystem nach einem der Ansprüche 1 bis 13, **dadurch gekennzeichnet, dass** die Platten (1, 22) aus Metall gefertigt sind.

15. Leitungsdurchführungssystem nach einem der Ansprüche 1 bis 14, **dadurch gekennzeichnet, dass** die Platten (1, 22) rechteckförmig sind.

16. Leitungsdurchführungssystem nach einem der Ansprüche 1 bis 15, **dadurch gekennzeichnet, dass** der Durchführungsquerschnitt (10) der mindestens einen Durchführung (9) in geometrischer Form und Größe dem Leitungsquerschnitt (8) der mindestens einen Leitung (7) entspricht.
